# EUROPÄISCHE PATENTSCHRIFT

(11) **EP 3 995 334 B1**
(45) Veröffentlichungstag und Bekanntmachung des Hinweises auf die Patenterteilung: **22.01.2025**
(21) Anmeldenummer: 20206255.0
(22) Anmeldetag: 06.11.2020
(51) Int. Cl.: B60K 1/00, B60K 1/04, B60K 7/00, B60H 1/00, B62D 47/02

(54) **ELEKTROBUS**
ELECTROBUS
BUS ÉLECTRIQUE

(43) Veröffentlichungstag der Anmeldung: 11.05.2022
(73) Patentinhaber: Carrosserie Hess AG, 4512 Bellach (CH)
(72) Erfinder: Naef, Alex, 4512 Bellach (CH)
(74) Vertreter: Keller Schneider Patent- und Markenanwälte AG

(56) Entgegenhaltungen:
- EP-A1- 3 305 570
- EP-A1- 3 367 495
- EP-A1- 3 427 986
- WO-A1-97/08041
- DE-A1- 102018 205 320
- DE-U1- 202007 012 413
- JP-A- 2009 154 826
- US-A1- 2006 237 242
- US-B1- 10 690 234

## Beschreibung

### Technisches Gebiet

Die Erfindung betrifft einen Elektrobus mit einem elektrischen Antrieb, wobei der Fahrgastraum des Elektrobusses hinter der zweiten Achse frei von Komponenten des Antriebs ist.

### Stand der Technik

Die EP 3 427 986 A1 (MAN Truck & Bus AG) beschreibt einen Elektrobus, bei welchem im Dachbereich Komponenten des Elektroantriebs, insbesondere wenigstens eine Traktionsbatterie sowie ein Zusatzaggregat untergebracht sind. Dabei kann auf dem Dach das gesamte Traktionsbatteriesystem aufgenommen werden, inklusive den Zellmodulen sowie einer Kühlung. Auch weitere Komponenten des Elektrobusses, wie eine Klimaanlage, ein Inverter sowie ein Pantographen-Ladesystem, können auf dem Dach angeordnet sein.

Die EP 3 305 570 A1 (Hino Motors Ltd.) offenbart einen Gelenkbus mit einem Hybridantrieb, bei welchem Batterien auf dem Dach des vorderen Wagenteils angeordnet sind, insbesondere oberhalb der zweiten Achse. Auf dem vorderen Wagenteil befindet sich weiter eine Klimaanlage, die zwischen der ersten und der zweiten Achse angeordnet ist. Der hintere Wagenteil verfügt über einen Antriebsmotor, der am hinteren Ende des hinteren Wagenteils angeordnet ist. Der hintere Wagenteil verfügt ferner über eine Antriebsachse, die vor dem Antriebsmotor angeordnet ist. Zudem verfügt der hintere Wagenteil ebenfalls über eine Klimaanlage, die vor der hinteren Achse angeordnet ist.

Die DE 26 11 993 (Magirus Deutz AG) bezieht sich auf einen Bus, bei welchem das Antriebsaggregat auf dem Dach des Busses angeordnet ist, wobei die Übertragung der Antriebskraft zu den Rädern des Busses über eine auf dem Dach verlaufende Welle, die mit einer senkrecht durch den Fahrgastraum führenden Zwischenwelle auf eine unter dem Boden des Busses angeordneten Antriebswelle wirkt, sichergestellt ist. Durch diese Anordnung lässt sich die Höhe des Bodens des Busses senken.

Die EP 0 069 714 A2 (Mauro Marchionni) beschreibt einen Flughafenbus, bei welchem durch eine Anordnung eines Motors auf dem Dach sowie einer hydraulischen oder elektrischen Kraftübertragung auf die Räder des Busses der Fahrgastraum möglichst viel freie Fläche erhält. Dadurch können die Fahrgasttüren an Front und Heck des Busses angeordnet werden, so dass dieser im rechten Winkel möglichst nah an ein Flugzeug heranfahren kann.

EP 3 176 022 A1 (Creatio Irizar Group Innovation Center Aie) offenbart einen Elektrosolobus mit zwei Batterien, welche jeweils oberhalb der zwei Achsen des Elektrobusses auf dem Dach angeordnet sind. Durch die Anordnung der Batterien auf dem Dach steht im Fahrgastraum mehr Nutzfläche zur Verfügung. Ferner sind auf dem Dach des Elektrobusses auch ein Umrichter sowie eine Klimaanlage angeordnet, vorzugsweise zwischen den beiden Batterien.

Die US 10,690,234 B1 (Proterra Inc.) beschreibt einen Antriebsstrang für ein Kraftfahrzeug, zum Beispiel für einen Elektrobus, der einen Fahrgastraum aufweist. Der Elektrobus weist mindestens eine Antriebsbatterie auf, welche auf dem Dach des Elektrobusses angeordnet sein kann. Auf dem Dach kann ferner ein Lademodul angeordnet sein, mit welchem die Antriebsbatterie geladen werden kann. Ferner kann der Elektrobus auch ein Klimasystem aufweisen, mit welchem unter anderem die Antriebsbatterie oder die Elektromotoren gekühlt werden können und welche auf dem Dach angeordnet sein kann.

### Darstellung der Erfindung

Aufgabe der Erfindung ist es, eine dem eingangs genannten technischen Gebiet zugehörenden Elektrobus zu schaffen, welcher über eine möglichst grosse Nutzfläche im Fahrgastraum verfügt und bei welchem die Komponenten des Antriebs einfach zugänglich sind.

Die Lösung der Aufgabe ist durch die Merkmale des Anspruchs 1 definiert. Gemäss der Erfindung weist ein Elektrobus ein Chassis sowie eine darauf aufgebaute Karosserie mit Dach auf, welche einen Fahrgastraum umgibt. Der Elektrobus verfügt ferner über eine erste, gelenkte Achse sowie über eine in Fahrtrichtung hinter der ersten, gelenkten Achse liegende zweite Achse. Die zweite Achse wird über mindestens einen Elektromotor angetrieben. Der Elektrobus weist ferner mindestens einen Energiespeicher zum Versorgen des mindestens einen Elektromotors mit Strom, ein Umrichtersystem, ein

Kühlsystem für den mindestens einen Energiespeicher sowie ein Ladesystem, welches lösbar mit einem Stromnetz verbindbar ist, um den mindestens einen Energiespeicher zu laden, auf. Der mindestens eine Energiespeicher sowie das Kühlsystem sind auf dem Dach angeordnet. Der mindestens eine Elektromotor ist ein Radnabenmotor an der zweiten Achse oder ist in Fahrtrichtung vor der zweiten Achse am Chassis des Elektrobusses angeordnet. Der Fahrgastraum ist in Fahrtrichtung hinter der zweiten Achse frei von Komponenten des Antriebs.

Durch die spezifische Anordnung des mindestens einen Energiespeichers, des Kühlsystems sowie des mindestens einen Elektromotors in Verbindung mit dem Freilassen des Fahrgastraumes hinter der zweiten Achse kann die Nutzfläche des Fahrgastraumes möglichst gross ausgestaltet sein. Zudem sind die Komponenten des Antriebs durch die gewählte Anordnung für Wartungs- sowie Reparaturzwecke gut erreichbar.

Unter dem Begriff Elektrobus wird in der vorliegenden Anmeldung ein Bus verstanden, der mittels in mindestens einem Energiespeicher gespeicherter elektrischer Energie selbstständig fahren kann. Er verfügt weder über einen Verbrennungsmotor noch über Stromabnehmerstangen, wie dies bei Diesel-, Gas- oder Hybridbussen bzw. Trolleybussen der Fall ist.

Der Elektrobus ist vorzugsweise ein Stadtbus. Allerdings kann der erfindungsgemässe Elektrobus auch als Überlandbus konfiguriert sein. Die Unterschiede in der Konfiguration zwischen Stadtbus und Überlandbus liegen im Bereich der Reichweite des Elektrobusses, der Anzahl an Fahrgasttüren sowie der Anzahl und Anordnung von Sitzen und Haltestangen innerhalb des Fahrgastraumes. Stadtbusse weisen in der Regel eine höhere Anzahl an Fahrgasttüren auf, während der Fahrgastraum für einen raschen Fahrgastwechsel sowie eine möglichst hohe Fahrgastkapazität optimiert ist, also mitunter eine grössere Fläche für Stehplätze aufweist. Überlandbusse weisen hingegen eine tiefere Anzahl an Fahrgasttüren auf und deren Fahrgastraum ist eher sitzoptimiert, da die Fahrgäste in der Regel länger im Bus sitzen und die Anzahl an Fahrgastwechseln tiefer ist. Da bei einem Überlandbus grössere Strecken zu bewältigen sind, bevor der Elektrobus wieder eine Ladestation erreicht und zudem auch höhere Geschwindigkeiten sowie grössere Distanzen zwischen Haltestellen als bei einem Stadtbus gefahren werden, müssen die Komponenten des Antriebes entsprechend anders konfiguriert werden.

Chassis und Karosserie sind in bekannter Manier aufgebaut, wobei die Karosserie je nach Einsatzgebiet und/oder Operateur des Elektrobusses unterschiedlich ausgestaltet sein kann, insbesondere was deren Form, deren Anzahl und Anordnung von Fenstern sowie Fahrgasttüren angeht. Der erfindungsgemässe Elektrobus verfügt innerhalb des Fahrgastraumes über einen Fahrerbereich bzw. eine Fahrerkabine. Diese ist, je nachdem ob der Elektrobus für Rechts- oder Linksverkehr konfiguriert ist, in Fahrtrichtung entweder links oder rechts vorne angeordnet. Auch die Fahrgasttüren befinden sich je nachdem in Fahrtrichtung rechts oder links. Bei speziellen Ausführungsformen des Elektrobusses, beispielsweise als Flughafenbus, können auch auf beiden Seiten Fahrgasttüren angeordnet sein.

In der folgenden Anmeldung wird als "Fahrtrichtung" die Hauptfahrrichtung des Elektrobusses verstanden, also demnach die Richtung, in welcher der Elektrobus im Passagierverkehr fährt. Es versteht sich, dass der Elektrobus zum Manövrieren auch in die entgegengesetzte Richtung fahren kann, was gemeinhin als Rückwärtsfahrt bezeichnet wird. Demgemäss entspricht die Fahrtrichtung der Richtung der Vorwärtsfahrt des Elektrobusses.

Die zweite Achse ist vorzugsweise eine starre Achse, welche nicht gelenkt werden kann. Je nach Länge des Elektrobusses oder des benötigten Wendekreises des Elektrobusses kann die zweite Achse jedoch auch gelenkt sein. Die zweite Achse wird mittels des Elektromotors angetrieben. Dabei ist sowohl ein Direktantrieb der zweiten Achse durch einen Radnabenmotor wie auch ein Antrieb über ein zwischen der zweiten Achse und dem mindestens einen Elektromotor angeordnetes Getriebe möglich.

Der mindestens eine Energiespeicher kann insbesondere eine aufladbare Batterie (Akkumulator) und/oder ein Superkondensator (Supercap) sein. Vorzugsweise verfügt der Elektrobus über mehr als einen Energiespeicher. Nebst dem Elektromotor werden vorzugsweise auch alle Nebenverbraucher des Elektrobusses, also zum Beispiel Innen- und Aussenbeleuchtung, Heizung, Informationssystem etc., mittels des mindestens einen Energiespeichers mit Strom versorgt.

Mit dem Umrichtersystem kann eine Umwandlung von Wechsel- in Gleichspannung erfolgen, wobei der Elektrobus vorzugsweise zusätzlich über mindestens einen Gleichspannungswandler verfügt, mit welchem unterschiedliche Spannungen für Nebenverbraucher erzeugt werden können, z. B. 24 V. Das Umrichtersystem umfasst vorzugsweise mindestens einen Umrichter sowie mindestens eine Kontaktbox, insbesondere mehrere Umrichter sowie mehrere Kontaktboxen.

Das Ladesystem dient zum Aufladen des mindestens einen Energiespeichers mit Strom. Das Ladesystem kann beispielsweise manuell durch den Fahrer des Elektrobusses mit einem Stromnetz verbunden werden, beispielsweise über eine Steckdose und ein Ladekabel. Vorzugsweise ist das Ladesystem jedoch derart ausgestaltet, dass dieses autonom oder auf Knopfdruck des Fahrers sich selbstständig mit einem Stromnetz verbindet. Dies kann beispielsweise über einen auf dem Elektrobus angeordneten heb- und senkbaren Pantographen realisiert werden, welcher mit entsprechenden Kontaktflächen einer Ladestation in Berührung gebracht werden kann. Alternativ kann das Ladesystem auch aus Kontaktflächen auf dem Dach des Elektrobusses bestehen, welche mit einem von einer Ladestation senk- und hebbaren Element, insbesondere in der Form eines Pantographen, in Kontakt gebracht werden können. Alternativ kann das Ladesystem auch anders ausgestaltet sein, beispielsweise als Empfänger eines Systems zur drahtlosen Energieübertragung.

Der Elektrobus verfügt vorzugsweise auch über eine entsprechende Steuerelektronik, welche den Ladezustand des mindestens einen Energiespeichers sowie die Verbrauchswerte des mindestens einen Elektromotors sowie der Nebenverbraucher überwacht und steuert.

Hinter der zweiten Achse des Elektrobusses befindet sich keine Komponente des Antriebs, das heisst, dass in diesem Teil des Elektrobusses die Fläche des Fahrgastraumes gänzlich zur Beförderung von Passagieren verwendet werden kann. Hierbei kann dieser Bereich des Fahrgastraumes als Stehfläche oder Abstellfläche für Rollstühle oder Kinderwagen ausgestaltet sein. Alternativ können in diesem Bereich auch Sitze angeordnet sein. Vorzugsweise verfügt der Elektrobus in diesem Bereich hinter der zweiten Achse über eine Fahrgasttüre.

Als Komponenten des Antriebs werden in der vorliegenden Anmeldung der mindestens eine Elektromotor, der mindestens eine Energiespeicher, das Umrichtersystem sowie das Kühlsystem für den mindestens einen Energiespeicher verstanden.

Das Ladesystem ist vorzugsweise auf dem Dach oberhalb der ersten, gelenkten Achse angeordnet. Dies bietet unter anderem den Vorteil dass der Fahrer relativ nah unterhalb des Ladesystems sitzt, so dass dessen Position relativ zu einer Ladestation beim Anfahren derselben durch den Fahrer gut eingeschätzt werden kann.

Das Ladesystem ist vorzugsweise symmetrisch in Bezug auf eine Längsachse des Elektrobusses angeordnet, das heisst, dass das Ladesystem sich seitlich der Längsachse auf beiden Seiten im Wesentlichen gleich weit von der Längsachse her erstreckt.

Das Ladesystem ist oberhalb der ersten Achse angeordnet, das heisst, dass der Schwerpunkt des Ladesystems sich im Wesentlichen vertikal oberhalb der ersten Achse befindet, wobei der Schwerpunkt des Ladesystems nicht weiter als 0.5 Meter entlang der Längsachse von einem Punkt entfernt ist, der direkt oberhalb der ersten Achse liegt.

Das Ladesystem ist vorzugsweise zumindest an dessen Seiten teilweise von Wänden bzw. Verkleidungen umgeben und lässt sich automatisch mit dem externen Stromnetz verbinden, beispielsweise auf Knopfdruck des Fahrers.

Vorzugsweise ist auf dem Dach zusätzlich mindestens eine Klimaanlage zum Kühlen des Fahrgastraumes angeordnet. Durch die Anordnung der mindestens einen Klimaanlage auf dem Dach des Elektrobusses kann die Nutzfläche des Fahrgastraumes im Vergleich zu einer Anordnung der mindestens einen Klimaanlage im Heckbereich des Fahrgastraumes zusätzlich vergrössert werden.

Die mindestens eine Klimaanlage ist vorzugsweise auch derart ausgestaltet, dass damit der Fahrgastraum auch beheizt werden kann. Die mindestens eine Klimaanlage wird als Nebenverbraucher vorzugsweise durch den mindestens einen Energiespeicher mit Strom versorgt.

Vorzugsweise ist das Umrichtersystem neben oder in Fahrtrichtung unmittelbar hinter dem Ladesystem auf dem Dach angeordnet. Dadurch befindet das Umrichtersystem auch oberhalb der ersten Achse bzw. in deren unmittelbaren Nähe. Bei einer Anordnung des Umrichtersystems neben dem Ladesystem sind Bestandteile des Umrichtersystems vorzugsweise beidseitig des Ladesystems angeordnet.

Unter unmittelbar hinter dem Ladesystem wird verstanden, dass zwischen dem Ladesystem und der am weitesten vom Ladesystem entfernten Komponente des Umrichtersystems nicht mehr als 1 Meter Abstand vorliegt.

Das Umrichersystem verfügt vorzugsweise über ein Gehäuse, welches die Komponenten des Umrichtersystems zumindest teilweise umgibt, um diese z.B. vor Schmutz, Steinschlag oder der Witterung zu schützen.

In einer alternativ bevorzugten Ausführungsform kann das Umrichtersystem auch im Bereich des mindestens einen Elektromotors am oder oberhalb des Chassis und in Fahrtrichtung vor der zweiten Achse angeordnet sein.

Vorzugsweise ist der mindestens eine Elektromotor in Fahrtrichtung auf der rechten Seite angeordnet.

Durch diese seitliche Anordnung wird sichergestellt, dass in der Mitte des Fahrgastraumes genügend Platz für eine ebene Durchgangs- und Stehfläche zur Verfügung steht. Sofern der mindestens eine Elektromotor kein Radnabenmotor ist, ist dieser vorzugsweise oberhalb des Chassis angeordnet, so dass der erfindungsgemässe Elektrobus als Niederflurbus ausgestaltet sein kann.

Die Karosserie verfügt vorzugsweise im Bereich des mindestens einen Elektromotors über eine von aussen zugängliche Wartungsklappe, so dass der mindestens eine Elektromotor auf einfache Weise von aussen gewartet und repariert werden kann.

Der Elektrobus ist vorzugsweise ein Solobus. Als Solobus weist der erfindungsgemässe Elektrobus vorzugsweise eine Länge von 8 bis 16 Metern, insbesondere von 10 bis 12 Metern auf.

Der mindestens eine Energiespeicher ist vorzugsweise in einem Bereich auf dem Dach angeordnet, der in Fahrtrichtung vor der zweiten Achse liegt, insbesondere zwischen der ersten, gelenkten Achse und der zweiten Achse.

Das heisst, dass bei dieser Ausführungsform der Schwerpunkt des mindestens einen Energiespeichers zwischen der ersten und der zweiten Achse liegt, wobei kein Bestandteil des mindestens einen Energiespeichers oberhalb oder in Fahrtrichtung hinter der zweiten Achse des Elektrobusses liegt.

Durch diese Anordnung kann das Gewicht des mindestens einen Energiespeichers auf die erste wie auch auf die zweite Achse verteilt werden, was insbesondere bei der Ausführung des Elektrobusses als Solobus bezüglich Achslast und Strassenlage von Vorteil ist.

Bei der Ausführung des Elektrobusses als 12 Meter langer Solobus wird der mindestens eine Energiespeicher vorzugsweise derart auf dem Dach des Elektrobusses angeordnet, dass dessen Schwerpunkt zwischen 3 bis 6 Meter, insbesondere 4 Meter hinter der ersten Achse liegt.

Vorzugsweise ist die mindestens eine Klimaanlage in Fahrtrichtung hinter und/oder oberhalb der zweiten Achse auf dem Dach angeordnet.

Durch diese Anordnung kann die Last auf dem Dach des als Solobus ausgestalteten Elektrobusses, insbesondere bei der Anordnung des Ladesystems oberhalb der ersten Achse, optimal verteilt werden.

Das Kühlsystem ist in Fahrtrichtung vorzugsweise vor dem mindestens einen Energiespeicher angeordnet. Bei der Ausgestaltung des Elektrobusses als Solobus ist das Kühlsystem demnach zwischen Ladesystem/Umrichtersystem sowie dem mindestens einen Energiespeicher angeordnet. Insbesondere bevorzugt ist die mindestens eine Klimaanlage derart auf dem Dach des Elektrobusses angeordnet, dass deren Schwerpunkt 9 Meter oder mehr von der ersten Achse entfernt liegt.

Nebst einem Solobus kann der erfindungsgemässe Elektrobus auch vorzugsweise ein Gelenkbus sein, welcher über einen vorderen Wagenteil mit der ersten, gelenkten Achse sowie der zweiten Achse sowie über einen zweiten Wagenteil verfügt, wobei der zweite Wagenteil über ein Gelenkteil mit dem ersten Wagenteil verbunden ist und über eine dritte Achse verfügt.

In bekannter Weise verfügt auch der hintere Wagenteil über ein Chassis sowie einer Karosserie.

Der Gelenkteil umfasst vorzugsweise einen Drehkranz, der beide Wagenteile verbindet, sowie einen Faltenbalg, der eine für Fahrgäste durchgängige Verbindung zwischen dem Fahrgastraum im vorderen Wagenteil und dem Fahrgastraum im hinteren Wagenteil herstellt.

Vorzugsweise ist der Fahrgastraum in Fahrtrichtung hinter der dritten Achse frei von Komponenten des Antriebs. Dadurch lässt sich die Nutzfläche des Fahrgastraumes weiter maximieren.

Die dritte Achse ist vorzugweise eine starre Achse. Je nach Einsatzzweck des Elektrobusses oder des erwünschten Wendekreises kann die dritte Achse jedoch auch eine aktiv oder passiv gelenkte Achse sein.

In der Gelenkbusvariante verfügt der erfindungsgemässe Elektrobus vorzugsweise über zwei Fahrgasttüren im vorderen Wagenteil sowie eine oder zwei Fahrgasttüren im hinteren Wagenteil. Die Länge des Elektrobusses als Gelenkbus beträgt vorzugsweise von 14 bis 18.75 Metern.

Der erfindungsgemässe Elektrobus kann alternativ auch als Doppelgelenkbus ausgestaltet sein, welcher über einen vorderen, mittleren sowie hinteren Wagenteil verfügt. Die Wagenteile sind dabei jeweils über ein Gelenkteil verbunden.

Sofern der Elektrobus als Gelenkbus ausgestaltet ist, verfügt dieser vorzugsweise über mehrere Energiespeicher, welche auf dem Dach des vorderen Wagenteils in Fahrtrichtung hinter der ersten, gelenkten Achse sowie auf dem hinteren Wagenteil in Fahrtrichtung vor der dritten Achse angeordnet sind.

Dadurch wird eine gleichmässige Verteilung des Gewichts der Energiespeicher über alle drei Achsen erzielt. Bei der Verwendung von aufladbaren Batterien können diese ein Gewicht von bis zu 4 Tonnen aufweisen, womit eine möglichst gleichmässige Gewichtsverteilung wichtig ist, damit die jeweilige Achslast nicht zu hoch wird. Die Energiespeicher sind vorzugsweise derart auf dem Dach angeordnet, dass deren Schwerpunkt mindestens 7 Meter in Fahrtrichtung hinter der ersten, gelenkten Achse liegt. Dadurch liegt der Schwerpunkt der Energiespeicher vorzugsweise mindestens 1 Meter in Fahrtrichtung hinter der zweiten Achse und vorzugsweise mindestens 7 Meter vor der dritten Achse. Die Energiespeicher sind demnach vorzugsweise derart auf dem Dach des Elektrobusses angeordnet, dass deren Schwerpunkt im Wesentlichen auf halber Distanz zwischen der ersten und der dritten Achse liegt.

Vorzugsweise verfügen sowohl der vordere Wagenteil als auch der hintere Wagenteil jeweils über mindestens eine Klimaanlage, wobei die mindestens eine Klimaanlage des vorderen Wagenteils in Fahrtrichtung vor den Energiespeichern und die mindestens eine Klimaanlage des hinteren Wagenteils in Fahrtrichtung hinter und/oder oberhalb der dritten Achse auf dem Dach angeordnet sind.

Die mindestens eine Klimaanlage des vorderen Wagenteils liegt somit vorzugsweise zwischen dem Ladesystem und den Energiespeichern. Beim hinteren Wagenteil bildet die mindestens eine Klimaanlage vorzugsweise das in Fahrtrichtung gesehen letzte Element, welches auf dem Dach des Elektrobusses in der Gelenkbusvariante angeordnet ist.

Das Kühlsystem ist vorzugsweise auf dem hinteren Wagenteil in Fahrtrichtung hinter den Energiespeichern angeordnet. Das Kühlsystem ist über entsprechende, flexible Leitungen mit den Energiespeichern auf dem vorderen Wagenteil verbunden, um eine Kühlung aller Energiespeicher des Elektrobusses zu ermöglichen.

Der mindestens eine Energiespeicher ist vorzugsweise mindestens eine aufladbare Batterie. Die Anzahl, Grösse, Speicherkapazität sowie Typ der Batterien kann je nach Einsatzzweck des Elektrobusses entsprechend variiert werden. Massgebend sind insbesondere die nötige Reichweite, die durchschnittliche Fahrgeschwindigkeit sowie die Topographie des Einsatzgebietes, da diese Faktoren einen wesentlichen Einfluss auf den Energieverbrach des Elektrobusses haben.

Das Ladesystem umfasst insbesondere einen heb- und senkbaren Pantographen. Das Heben und Senken kann auf bekannte Weise mittels eines pneumatischen, hydraulischen oder elektromechanischen Antriebs erfolgen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Seitenansicht einer ersten Ausführungsform des erfindungsgemässen Elektrobusses als Solobus;
- Fig. 2: eine Draufsicht auf das Dach der Ausführungsform gemäss Fig. 1;
- Fig. 3: eine Seitenansicht einer nicht erfindungsgemässen Ausführungsform eines Elektrobusses als Gelenkbus;
- Fig. 4: eine Draufsicht auf das Dach der nicht erfindungsgemässen Ausführungsform gemäss Fig. 3;
- Fig. 5: eine erste Ausführungsform eines Bereichs hinter der zweiten Achse bei der Solobusvariante bzw. hinter der dritten Achse bei der Gelenkbusvariante des erfindungsgemässen Elektrobusses;
- Fig. 6: eine zweite Ausführungsform des Bereichs gemäss Fig. 5.

Grundsätzlich sind in den Figuren gleiche Teile mit gleichen Bezugszeichen versehen.

### Wege zur Ausführung der Erfindung

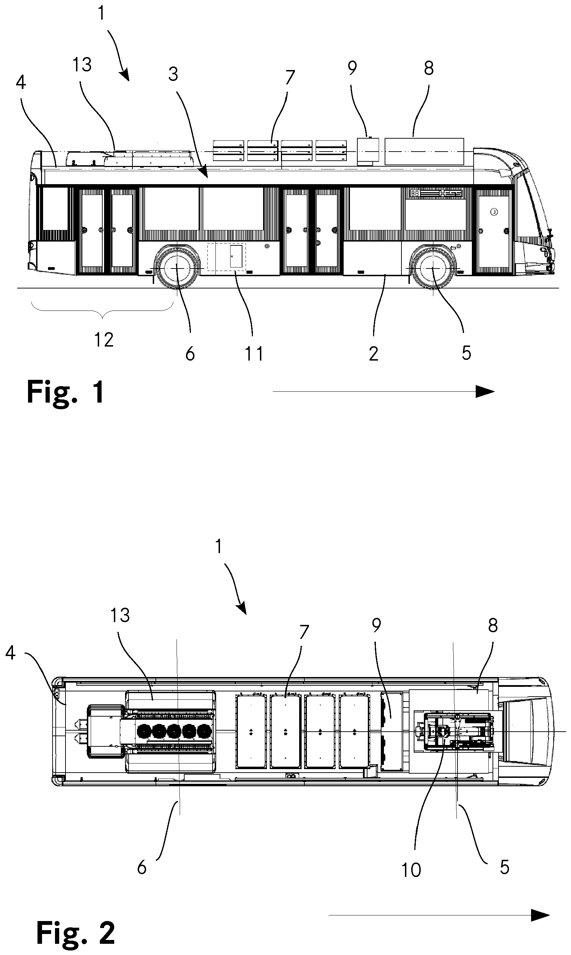

Die Fig. 1 zeigt eine erste Ausführungsform eines erfindungsgemässen Elektrobusses 1 als Solobus in der Seitenansicht. Fig. 2 zeigt dieselbe Ausführungsform des Elektrobusses 1 als Draufsicht auf das Dach 4. Der Elektrobus 1 verfügt über ein Chassis 2, auf welchem eine Karosserie 3 aufgebaut ist, welche einen Fahrgastraum umgibt. In gewohnter Manier verfügt der Elektrobus über Fahrgasttüren, Fenster, Front- und Heckscheibe usw. Im Fahrgastraum sind ein Fahrerbereich bzw. eine Fahrerkabine sowie Sitze, Haltestangen und Stehbereiche für Fahrgäste angeordnet.

Der erfindungsgemässe Elektrobus 1 als Solobus verfügt über eine erste, gelenkte Achse 5 sowie eine zweite Achse 6. Beide Achsen 5, 6 sind beidseitig mit Rädern versehen, wobei die Karosserie 3 über entsprechende Aussparungen für die Räder verfügt. Die zweite Achse 6 wird durch einen Elektromotor 11 (gestrichelt angedeutet) angetrieben, der sich in Fahrtrichtung gesehen (Pfeil) vor der zweiten Achse 6 auf der Seite der Fahrgasttüren befindet. Die gezeigte Ausführungsform des Elektrobusses 1 ist für den Rechtsverkehr (links gesteuert) konfiguriert, demgemäss befinden sich die Fahrgasttüren sowie der Elektromotor 11 auf der in Fahrtrichtung gesehen rechten Seite des Elektrobusses 1.

Auf dem Dach 4 des Elektrobusses 1 sind die nebst dem Elektromotor 11 weiteren Komponenten des Antriebs untergebracht, insbesondere die in der gezeigten Ausführungsform als Batterien ausgestalteten Energiespeicher 7. Die Energiespeicher 7 sind auf dem Dach 4 des Elektrobusses 1 in einem Bereich zwischen der ersten Achse 5 und der zweiten Achse 6 angeordnet. Dadurch liegt der Schwerpunkt der Energiespeicher 7 zwischen de ersten Achse 5 und der zweiten Achse. Ferner befindet sich ein Ladesystem 10 auf dem Dach 4 des Elektrobusses 1. Das Ladesystem 10 befindet sich auf dem Dach 4 oberhalb der ersten Achse 5, wobei der Schwerpunkt des Ladesystems 10 sich im Wesentlichen oberhalb der ersten Achse 5 befindet. Beidseits neben dem Ladesystem 10 ist ein Umrichtersysetem 8 angeordnet. Zwischen dem Umrichtersysestem 8 bzw. dem Ladesystem 10 und den Energiespeichern 7 befindet sich ein Kühlsystem 9 für die Energiespeicher 7 auf dem Dach 4 des Elektrobusses 1. In einem Bereich oberhalb sowie in Fahrtrichtung hinter der zweiten Achse 6 ist eine Klimaanlage 13 auf dem Dach 4 des Elektrobusses 1 angeordnet.

Ein Bereich 13 des Fahrgastraumes in Fahrtrichtung hinter der zweiten Achse 6 ist frei von Komponenten des Antriebs, so dass in diesem Bereich 13 die gesamte Fläche innerhalb der Karosserie als Nutzfläche zur Verfügung steht, beispielsweise für einen Stehbereich, einen Abstellbereich für Kinderwage oder Rollstühle oder für zusätzliche Sitze.

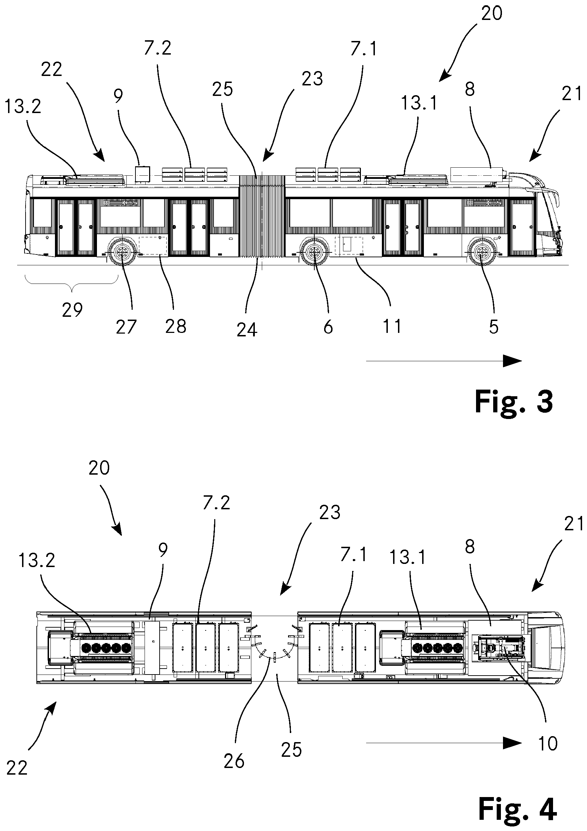

Die Fig. 3 zeigt eine nicht erfindungsgemässe Ausführungsform eines Elektrobusses 20 als Gelenkbus in einer Seitenansicht. Die Fig.4 zeigt dieselbe, nicht erfindungsgemässe Ausführungsform in einer Draufsicht auf das Dach 4. Der Elektrobus 20 umfasst einen vorderen Wagenteil 21 sowie einen hinteren Wagenteil 22. Die beiden Wagenteile 21, 22 sind durch einen Gelenkteil 23 miteinander gelenkig verbunden. Der Gelenkteil umfasst einen Drehkranz 24, der das Chassis des vorderen Wagenteils 21 mit dem Chassis des hinteren Wagenteils 22 verbindet sowie einen Faltenbalg, der eine durchgängige Verbindung zwischen dem Fahrgastraum des vorderen Wagenteils 21 sowie des hinteren Wagenteils 22 schafft.

Der vordere Wagenteil 21 weist die erste, gelenkte Achse 5 sowie die zweite Achse 6 auf. Der Elektromotor 11 (gestrichelt angedeutet) ist wie bei der ersten Ausführungsform in Fahrtrichtung (Pfeil) gesehen vor der zweiten Achse 6 angeordnet, wiederum auf der Seite des Elektrobusses, auf der sich die Fahrgasttüren befinden. Dies ist wiederum die rechte Seite, da der Elektrobus 1 für den Rechtsverkehr konfiguriert ist. Der Elektromotor 11 treibt die zweite Achse 6 an.

Der hintere Wagenteil 22 weist eine dritte Achse 27 auf. Bei der gezeigten Ausführungsform ist in Fahrtrichtung gesehen vor der dritten Achse 27 ein zweiter Elektromotor 28 (gestrichelt angedeutet) angeordnet, der die dritte Achse 27 antreibt.

Auf dem Dach 4 des Elektrobusses 1 ist wiederum ein Ladesystem 10 oberhalb der ersten Achse 5 angeordnet. Beidseits des Ladesystems 10 befindet sich ein Umrichtersystem 8. Eine erste Gruppe von Energiespeichern 7.1, welche bei der gezeigten Ausführungsform als aufladbare Batterien ausgestaltet sind, ist auf dem Dach 4 des vorderen Wagenteils 21 angeordnet. Eine zweite Gruppe an Energiespeichern 7.2 befindet sich auf dem Dach 4 des hinteren Wagenteils 22. Die beiden Gruppen an Energiespeichern 7.1, 7.2 sind derart auf dem Dach 4 angeordnet, dass sie sich zwischen der ersten Achse 5 und der dritten Achse 27 befinden. Die Energiespeicher 7.1, 7.2 erstrecken sich somit beidseits des Gelenkteils 23 auf dem Dach 4 des Elektrobusses 1.

Zwischen dem Ladesystem 10 bzw. dem Umrichtersystem 8 und der ersten Gruppe von Energiespeichern 7.1 ist eine erste Klimaanlage 13.1 für den vorderen Wagenteil 21 auf dem Dach 4 desselben angeordnet. Auf dem hinteren Wagenteil 22 ist in Fahrtrichtung hinter der dritten Achse 27 gesehen eine zweite Klimaanlage 13.2 für den hinteren Wagenteil 22 auf dem Dach 4 desselben angeordnet. Zwischen der zweiten Gruppe an Energiespeichern 7.2 und der zweiten Klimaanlage 13.2 befindet sich ein Kühlsystem 9 für die in den zwei Gruppen angeordneten Energiespeicher 7.1, 7.2.

Oberhalb des Faltenbalgs 25 sind Verbindungsleitungen 26 angeordnet, mit denen Strom sowie Kühlflüssigkeit für die Energiespeicher zwischen den Wagenteilen 21, 22 geleitet werden kann.

Bei der gezeigten Ausführungsform des Elektrobusses 1 als Gelenkbus ist auch ein zweiter Bereich 29 in Fahrtrichtung hinter der dritten Achse 27 frei von Komponenten des Antriebs. Dadurch kann die als Nutzfläche zur Verfügung stehende Fläche des Fahrgastraumes maximiert werden.

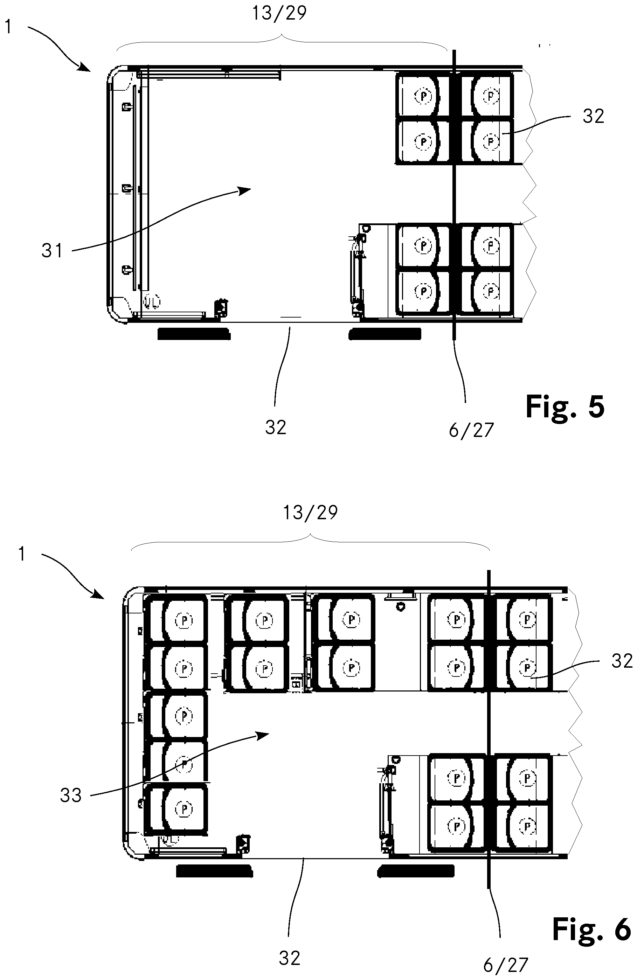

Die Fig. 5 zeigt eine erste Ausführungsform eines Bereichs 13 bzw. eines zweiten Bereichs 29 in Fahrtrichtung hinter der zweiten Achse 6 bzw. der dritte Achse 27. Zu sehen ist nur ein Ausschnitt des Elektrobusses 1 mit einer schematischen Draufsicht des Fahrgastraumes. Wie zu erkennen ist, befindet sich in Fahrtrichtung hinter der zweiten Achse 6 bzw. hinter der dritten Achse 27 im Fahrgastraum keine Komponente des Antriebs. Das heisst, dass in diesem Bereich 13, 29 die gesamte Fläche als Nutzfläche des Fahrgastraumes verwendet werden kann. Wie auf der Fig. 5 zu erkennen ist, befinden sich in einem Bereich oberhalb der zweiten Achse 6 bzw. der dritten Achse 27 Sitze 32, wobei sich in Fahrtrichtung gesehen hinter der zweiten Achse 6 bzw. der dritten Achse 27 ein freier stehplatzoptimierter Bereich 31 befindet. Dieser stehplatzoptimierte Bereich 31 kann auch als Abstellfläche für Kinderwagen oder Rollstühle verwendet werden. Im Bereich 13, 29 hinter der zweiten Achse 6 bzw. hinter der dritten Achse 27 befindet sich ferner eine hintere Fahrgasttüre 32, durch welche Fahrgäste direkt in den oder aus dem stehplatzoptimierten Bereich 31 gelangen.

Die Fig. 6 zeigt eine zweite Ausführungsform eines Bereichs 13 bzw. eines zweiten Bereichs 29 in Fahrtrichtung hinter der zweiten Achse 6 bzw. hinter der dritten Achse 27 analog zur Fig. 5. Bei der Ausführungsform gemäss Fig. 5 befindet sich hinter der zweiten Achse 6 bzw. hinter der dritten Achse 27 ein sitzplatzoptimierter Bereich 33 mit zusätzlichen Reihen an Sitzen 32

Dem Fachmann dürfte klar sein, dass auch eine Mischform aus den zwei in der Fig. 5 sowie der Fig. 6 gezeigten Ausführungsformen möglich ist, zum Beispiel ein stehplatzoptimierter Bereich 31 mit einer Reihe an fünf Sitzen zu hinterst.

## Patentansprüche

1. Elektrobus mit einem Chassis (2) und einer darauf aufgebauten Karosserie (3) mit Dach (4), welche einen Fahrgastraum umgibt, einer ersten, gelenkten Achse (5) sowie mit einer in Fahrtrichtung hinter der ersten, gelenkten Achse (5) liegenden zweiten Achse (6), mindestens einem Elektromotor (11, 28) zum Antreiben der zweiten Achse (6), mindestens einem Energiespeicher (7) zum Versorgen des mindestens einen Elektromotors (11, 28) mit Strom, einem Umrichtersystem (8), einem Kühlsystem (9) für den mindestens einen Energiespeicher (7) sowie einem Ladesystem (10), welches lösbar mit einem Stromnetz verbindbar ist, um den mindestens einen Energiespeicher (7) zu laden, wobei der mindestens eine Energiespeicher (7), sowie das Kühlsystem (9) auf dem Dach (4) angeordnet sind, wobei der mindestens eine Elektromotor (11, 28) ein Radnabenmotor an der zweiten Achse (6) ist oder in Fahrtrichtung vor der zweiten Achse (6) am Chassis (2) des Elektrobusses angeordnet ist und der Fahrgastraum in Fahrtrichtung hinter der zweiten Achse (6) frei von Komponenten des Antriebs ist, **dadurch gekennzeichnet, dass** das Ladesystem (10) auf dem Dach (4) oberhalb der ersten, gelenkten Achse (5) angeordnet ist, wobei das Umrichtersystem (8) neben dem Ladesystem (10) auf dem Dach (4) angeordnet ist.

2. Elektrobus nach Anspruch 1, **dadurch gekennzeichnet, dass** auf dem Dach (4) mindestens eine Klimaanlage (13) zum Kühlen des Fahrgastraumes angeordnet ist.

3. Elektrobus nach einem der Ansprüche 1 oder 2, **dadurch gekennzeichnet, dass** der mindestens eine Elektromotor (11, 28) in Fahrtrichtung auf der rechten Seite angeordnet ist.

4. Elektrobus nach einem der Ansprüche 1 bis 3, **dadurch gekennzeichnet, dass** der Elektrobus ein Solobus (1) ist.

5. Elektrobus nach Anspruch 4, **dadurch gekennzeichnet, dass** der mindestens eine Energiespeicher (7) in einem Bereich auf dem Dach (4) angeordnet ist, der in Fahrtrichtung vor der zweiten Achse (6) liegt, insbesondere zwischen der ersten, gelenkten Achse (5) und der zweiten Achse (6).

6. Elektrobus nach einem der Ansprüche 4 oder 5, **dadurch gekennzeichnet, dass** die mindestens eine Klimaanlage (13) in Fahrtrichtung hinter und/oder oberhalb der zweiten Achse (6) auf dem Dach (4) angeordnet ist.

7. Elektrobus nach einem der Ansprüche 4 bis 6, **dadurch gekennzeichnet, dass** das Kühlsystem (9) in Fahrtrichtung vor dem mindestens einen Energiespeicher (7) angeordnet ist.

8. Elektrobus nach einem der Ansprüche 1 bis 3, **dadurch gekennzeichnet, dass** der Elektrobus ein Gelenkbus (20) ist, welcher über einen vorderen Wagenteil (21) mit der ersten, gelenkten Achse (5) sowie der zweiten Achse (6) sowie über einen zweiten Wagenteil (22) verfügt, wobei der zweite Wagenteil (22) über ein Gelenkteil (23) mit dem ersten Wagenteil (21) verbunden ist und über eine dritte Achse (27) verfügt.

9. Elektrobus nach Anspruch 8, **dadurch gekennzeichnet, dass** der Elektrobus über mehrere Energiespeicher (7.1, 7.2) verfügt, welche auf dem Dach (4) des vorderen Wagenteils (21) in Fahrtrichtung hinter der ersten, gelenkten Achse (5) sowie auf dem hinteren Wagenteil (22) in Fahrtrichtung vor der dritten Achse (27) angeordnet sind.

10. Elektrobus nach einem der Ansprüche 8 oder 9, **dadurch gekennzeichnet, dass** sowohl der vordere Wagenteil (21) als auch der hintere Wagenteil (22) jeweils über mindestens eine Klimaanlage (13.1, 13.2) verfügen, wobei die mindestens eine Klimaanlage (13.1) des vorderen Wagenteils (21) in Fahrtrichtung vor den Energiespeichern (7.1, 7.2) und die mindestens eine Klimaanlage (13.2) des hinteren Wagenteils (23) in Fahrtrichtung hinter und/oder oberhalb der dritten Achse (27) auf dem Dach (4) angeordnet sind.

11. Elektrobus nach einem der Ansprüche 8 bis 10, **dadurch gekennzeichnet, dass** das Kühlsystem (9) auf dem hinteren Wagenteil (22) in Fahrtrichtung hinter den Energiespeichern (7.1, 7.2) angeordnet ist.

12. Elektrobus nach einem der Ansprüche 1 bis 11, **dadurch gekennzeichnet, dass** der mindestens eine Energiespeicher (7.1, 7.2) mindestens eine aufladbare Batterie ist.

13. Elektrobus nach einem der Ansprüche 1 bis 12, **dadurch gekennzeichnet, dass** das Ladesystem (10) einen heb- und senkbaren Pantographen umfasst.

14. Elektrobus nach einem der Ansprüche 1 bis 13, **dadurch gekennzeichnet, dass** Bestandteile des Umrichtersystems (8) beidseitig des Ladesystems (10) angeordnet sind.

## Claims

1. Electric bus comprising a chassis (2) and a body (3) constructed thereon, the body (3) having a roof (4) and sourrounding a passenger compartment, the electric bus further comprising a first, steered axle (5) and a second axle (6) which is located behind the first, steered axle (5) in the direction of travel, at least one electric motor (11, 28) for driving the second axle (6), at least one energy store (7) for supplying the at least one electric motor (11, 28) with current, a converter system (8), a cooling system (9) for the at least one energy store (7) and a charging system (10) which can be releasably connected to a power supply system in order to charge the at least one energy store (7), wherein the at least one energy store (7) and the cooling system (9) are arranged on the roof (4), and wherein the at least one electric motor (11, 28) is a wheel hub motor on the second axle (6) or is arranged on the chassis (2) of the electric bus in front of the second axle (6) in the direction of travel, and wherein the passenger compartment is free of components of the drive behind the second axle (6) in the direction of travel, **characterized in that** the charging system (10) is arranged on the roof (4) above the first, steered axle (5), wherein the converter system (8) is arranged on the roof (4) next to the charging system (10).

2. Electric bus according to Claim 1, **characterized in that** at least one air conditioning system (13) for cooling the passenger compartment is arranged on the roof (4).

3. Electric bus according to either of Claims 1 or 2, **characterized in that** the at least one electric motor (11, 28) is arranged on the right-hand side in the direction of travel.

4. Electric bus according to any of Claims 1 to 3, **characterized in that** the electric bus is a solo bus (1).

5. Electric bus according to Claim 4, **characterized in that** the at least one energy store (7) is arranged on the roof (4) in a region which is located in front of the second axle (6) in the direction of travel, in particular between the first, steered axle (5) and the second axle (6).

6. Electric bus according to either of Claims 4 or 5, **characterized in that** the at least one air conditioning system (13) is arranged on the roof (4) behind and/or above the second axle (6) in the direction of travel.

7. Electric bus according to any of Claims 4 to 6, **characterized in that** the cooling system (9) is arranged in front of the at least one energy store (7) in the direction of travel.

8. Electric bus according to any of Claims 1 to 3, **characterized in that** the electric bus is an articulated bus (20) which has a front carriage part (21) with the first, steered axle (5) and the second axle (6) and has a second carriage part (22), wherein the second carriage part (22) is connected to the first carriage part (21) via an articulated part (23) and has a third axle (27).

9. Electric bus according to Claim 8, **characterized in that** the electric bus comprises a plurality of energy stores (7.1, 7.2) which are arranged on the roof (4) of the front carriage part (21) behind the first, steered axle (5) in the direction of travel and on the rear carriage part (22) in front of the third axle (27) in the direction of travel.

10. Electric bus according to either of Claims 8 or 9, **characterized in that** both the front carriage part (21) and the rear carriage part (22) each comprise at least one air conditioning system (13.1, 13.2), wherein the at least one air conditioning system (13.1) of the front carriage part (21) is arranged in front of the energy stores (7.1, 7.2) in the direction of travel and the at least one air conditioning system (13.2) of the rear carriage part (23) is arranged behind and/or above the third axle (27) on the roof (4) in the direction of travel.

11. Electric bus according to any of Claims 8 to 10, **characterized in that** the cooling system (9) is arranged on the rear carriage part (22) behind the energy stores (7.1, 7.2) in the direction of travel.

12. Electric bus according to any of Claims 1 to 11, **characterized in that** the at least one energy store (7.1, 7.2) is at least one chargeable battery.

13. Electric bus according to any of Claims 1 to 12, **characterized in that** the charging system (10) comprises a pantograph which can be raised and lowered.

14. Electric bus according to any of Claims 1 to 13, **characterized in that** components of the converter system (8) are arranged on both sides of the charging system (10).

## Revendications

1. Bus électrique comportant un châssis (2) sur lequel est construite une carrosserie (3) avec un toit (4), qui entoure un habitacle, un premier essieu directeur (5) ainsi qu'un deuxième essieu (6) situé derrière le premier essieu directeur (5) dans la direction de conduite, au moins un moteur électrique (11, 28) pour entraîner le deuxième essieu (6), au moins un accumulateur d'énergie (7) pour alimenter en courant le au moins un moteur électrique (11, 28), un système de convertisseur (8), un système de refroidissement (9) pour le ou les accumulateurs d'énergie (7) et un système de charge (10) qui peut être connecté de manière réversible à un réseau électrique afin de charger au moins un accumulateur d'énergie (7), dans lequel le au moins un accumulateur d'énergie (7) ainsi que le système de refroidissement (9)sont disposés sur le toit, dans lequel le au moins un moteur électrique (11, 28) est un moteur de moyeu de roue sur le deuxième essieu (6) ou est disposé sur le châssis (2) du bus électrique devant le deuxième essieu (6) dans la direction de conduite et l'habitacle dans la direction de conduite est exempt de composants d'entraînement derrière le deuxième essieu (6), **caractérisé en ce que** le système de charge (10) est disposé sur le toit (4) au-dessus du premier essieu directeur (5), dans lequel le système de convertisseur (8) est situé à côté du système de charge (10) sur le toit (4).

2. Bus électrique selon la revendication 1, **caractérisé en ce que** sur le toit (4) est disposé au moins un système de climatisation (13) pour refroidir l'habitacle.

3. Bus électrique selon une des revendications 1 ou 2, **caractérisé en ce que** le au moins un moteur électrique (11, 28) est disposé du côté droit dans la direction de conduite.

4. Bus électrique selon une des revendications 1 à 3, **caractérisé en ce que** le bus électrique est un bus solo (1).

5. Bus électrique selon la revendication 4, **caractérisé en ce que** le au moins un accumulateur (7) est disposé dans une zone sur le toit (4), qui se situe devant le deuxième essieu (6) dans la direction de conduite, en particulier entre le premier essieu directeur (5) et le deuxième essieu (6).

6. Bus électrique selon une des revendications 4 ou 5, **caractérisé en ce que** le au moins un système de climatisation (13) est disposé dans la direction de conduite derrière et/ou au-dessus du deuxième essieu (6) sur le toit (4).

7. Bus électrique selon une des revendications 4 à 6, **caractérisé en ce que** le système de refroidissement (9) est disposé devant au moins un accumulateur d'énergie (7) dans la direction de conduite.

8. Bus électrique selon une des revendications 1 à 3, **caractérisé en ce que** le bus électrique est un bus articulé (20), qui comporte une partie avant de voiture (21) avec le premier essieu directeur (5) et le deuxième essieu (6) ainsi qu'une deuxième partie de voiture (22), dans lequel la deuxième partie de voiture (22) est raccordée à la première partie de voiture (21) par l'intermédiaire d'une partie d'articulation (23) et comporte un troisième essieu (27).

9. Bus électrique selon la revendication 8, **caractérisé en ce que** le bus électrique comporte plusieurs accumulateurs d'énergie (7.1, 7.2), qui sont disposés sur le toit (4) de la partie avant de voiture (21) dans la direction de conduite derrière le premier essieu directeur (5) ainsi que sur la partie arrière de voiture (22) dans la direction de conduite devant le troisième essieu (27).

10. Bus électrique selon une des revendications 8 ou 9, **caractérisé en ce que** tant la partie avant de voiture (21) que la partie arrière de voiture (22) comportent respectivement un système de climatisation (13.1, 13.2), dans lequel le au moins un système de climatisation (13.1) de la partie avant de voiture (21) est disposé devant les accumulateurs d'énergie (7.1, 7.2) dans la direction de conduite et le au moins un système de climatisation (13.2) de la partie arrière de voiture (23) dans la direction de conduite est disposé derrière et/ou au-dessus du troisième essieu (27) sur le toit (4).

11. Bus électrique selon une des revendications 8 à 10, **caractérisé en ce qu'**un système de refroidissement (9) est disposé sur la partie arrière de voiture (22) dans la direction de conduite derrière les accumulateurs d'énergie (7.1, 7.2).

12. Bus électrique selon une des revendications 1 à 11, **caractérisé en ce que** le au moins un accumulateur d'énergie (7.1, 7.2) est au moins une batterie rechargeable.

13. Bus électrique selon une des revendications 1 à 12, **caractérisé en ce que** le système de charge (10) comprend un pantographe pouvant être relevé et abaissé.

14. Bus électrique selon une des revendications 1 à 13, **caractérisé en ce que** des composants du système de convertisseur (8) sont disposés des deux côtés du système de charge (10).
